# EUROPÄISCHE PATENTSCHRIFT

(11) **EP 0 907 449 B1**
(45) Veröffentlichungstag und Bekanntmachung des Hinweises auf die Patenterteilung: **19.02.2003**
(21) Anmeldenummer: 97927033.7
(22) Anmeldetag: 24.05.1997
(51) Int. Cl.: B23D 77/02

(54) **WERKZEUG FÜR DIE SPANABHEBENDE FEINBEARBEITUNG**
MATERIAL-REMOVING PRECISION MACHINING TOOL
OUTIL POUR TRAVAUX DE PRECISION PAR ENLEVEMENT DE COPEAUX

(30) Priorität: 25.05.1996 DE 19621295
(43) Veröffentlichungstag der Anmeldung: 14.04.1999
(73) Patentinhaber: MAPAL Fabrik für Präzisionswerkzeuge Dr. Kress KG, D-73431 Aalen (DE)
(72) Erfinder: KRESS, Dieter, D-73431 Aalen (DE); HÄBERLE, Friedrich, D-73466 Lauchheim (DE)
(74) Vertreter: Gleiss, Alf-Olav, Dr.jur. Dipl.-Ing.
(86) Internationale Anmeldenummer: EP9702669
(87) Internationale Veröffentlichungsnummer: WO97045223

(56) Entgegenhaltungen:
- DE-A- 2 910 828
- DE-A- 3 429 498
- DE-A- 4 329 553
- DE-U- 7 726 025
- US-A- 4 076 445

## Beschreibung

Die Erfindung betrifft eine Reibahle für die spanabhebende Feinbearbeitung von Bohrungsoberflächen in Werkstücken aus Metall gemäß Oberbegriff des Anspruchs 1 und wie z.B. aus DE-A-4 329 553 bekannt ist.

Werkzeuge, insbesondere Reibahlen, der hier angesprochenen Art sind bekannt. Sie zeichnen sich dadurch aus, daß einer Messerplatte eine diametral gegenüberliegende Führungsleiste zugeordnet ist, wobei durch die Messerplatte und die Führungsleiste der Bearbeitungsdurchmesser des Werkzeugs festgelegt wird. Zur Stabilisierung des Werkzeugs innerhalb der Bohrung ist eine weitere Führungsleiste vorgesehen, die der Messerplatte -in Drehrichtung des Werkzeugs gesehen- um ca. 40° nacheilt. Mit Werkzeugen der hier beschriebenen Art lassen sich Bohrungsoberflächen unter Erzielung einer hohen Maßhaltigkeit und Oberflächengüte feinbearbeiten. Es hat sich als nachteilig herausgestellt, daß die Schneidleistung des Werkzeugs auch bei Erhöhung der Arbeitsdrehzahl häufig nicht ausreichend ist.

Daher ist Aufgabe der Erfindung, eine Reibahle für die spanabhebende Feinbearbeitung von Bohrungsoberflächen zu schaffen, die diese Nachteile nicht aufweist.

Zur Lösung dieser Aufgabe wird eine Reibahle der eingangs genannten Art vorgeschlagen, die die in Anspruch 1 genannten Merkmale aufweist. Die Reibahle zeichnet sich dadurch aus, daß die Grundanordnung der ersten Messerplatte und der beiden zugehörigen Führungsleisten beibehalten bleibt und daß eine zusätzliche Messerplatte vorgesehen ist. Um die optimale Abstützung des Werkzeugs in der zubearbeitenden Bohrung zu gewährleisten wird die zusätzliche Messerplatte voreilend gegenüber der der ersten Messerplatte gegenüberliegenden Führungsleiste angeordnet, wobei sich ein Winkel von 20° bis 50°, insbesondere von 30° bis 45° als günstig erweisen hat. Besonders bewährt hat sich ein Voreilungswinkel von circa 40°. Aufgrund dieser Anordnung ist sichergestellt, daß die der ersten Messerplatte gegenüberliegende Führungsleiste der zweiten Messerplatte um circa 40° nacheilt. Bei der Reibahle sind also zwei Messerplatten und zwei Führungsleisten vorgesehen, die jeweils der Messerplatte um 40° nacheilen. Bevorzugt wird außerdem eine Ausführungsform der Reibahle, bei der eine weitere Führungsleiste der zweiten Messerplatte diametral gegenüberliegend vorgesehen ist. Eine derartige Reibahle zeichnet sich also dadurch aus, daß die bislang bekannte, quasi Y-förmige Zuordnung einer Messerplatte und zweier Führungsleisten zweimal realisiert ist.

Bevorzugt wird außerdem eine Ausführungsform der Reibahle, bei der der Y-förmigen Anordnung einer Messerplatte und zweier Führungsleisten eine dritte Messerplatte zugeordnet ist, die der ersten Führungsleiste, die der ersten Messerplatte um circa 40° nacheilt, gegenüberliegend angeordnet ist.

Bevorzugt wird weiterhin eine Ausführungsform der Reibahle, bei der der Messerplatte, die der ersten Führungsleiste gegenüberliegt, eine weitere Führungsleiste zugeordnet ist, die um circa 40° nacheilt. Auch auf diese Weise ist es möglich, zwei Y-förmige Zuordnungen zweier Messerplatten und jeweils zweier Führungsleisten zu realisieren.

Bevorzugt wird schließlich eine Ausführungsform der Reibahle, daß drei Messerplatten aufweist, wobei zumindest eine Y-förmige Grundanordnung einer Messerplatte und zweier zugehöriger Führungsleisten gewährleistet ist.

Die Erfindung wird im folgenden anhand der Zeichnungen näher erläutert. Es zeigen:
- Figur 1: eine Prinzipskizze einer Vorderansicht eines Werkzeugs mit zwei oder drei Schneiden;
- Figur 2: eine Prinzipskizze einer Vorderansicht eines Werkzeugs mit vier Schneiden und
- Figur 3: eine Prinzipskizze einer Vorderansicht eines Werkzeugs mit fünf Schneiden.

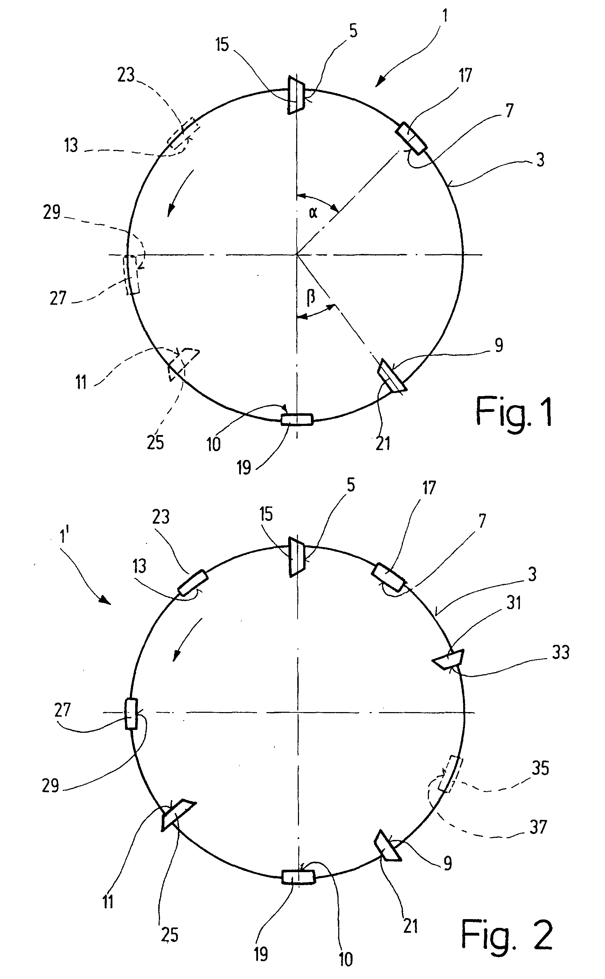

Die in Figur 1 wiedergegebene Prinzipskizze zeigt ein vorzugsweise als Reibahle ausgebildetes Werkzeug 1 in Vorderansicht. In die Umfangsfläche 3 des Werkzeugs 1 sind Nuten 5 bis 13 eingebracht, in die auf bekannte Weisen Schneidplatten und Führungsleisten eingesetzt sind. In der Nut 5 befindet sich eine erste Messerplatte 15, der -in Drehrichtung des Werkzeugs gesehen- eine erste Führungsleiste 17 um einen Winkel α nacheilt. Der Winkel α kann in einem Bereich von 20° bis 50° liegen. Insbesondere wird ein Winkel von 30° bis 45° gewählt. Besonders bewährt hat sich ein Winkel α von circa 40°, der hier auch in Figur 1 wiedergegeben ist.

Die erste Führungsleiste ist in die Nut 7 eingesetzt und dort auf geeignete Weise befestigt, beispielsweise durch Löten oder Verkleben.

Der Messerplatte 15 ist diametral gegenüberliegend eine zweite Führungsleiste 19 zugeordnet, die in der Nut 10 eingesetzt ist.

Die erste Messerplatte 15 und die zugehörigen Führungsleisten 17 und 19 bilden eine Y-förmige Grundanordnung.

Das Werkzeug 1 weist hier eine zweite Messerplatte 21 auf, die in die Nut 9 eingesetzt und dort auf geeignete Weise gehalten ist. Die Befestigung von Messerplatten ist bekannt. Es werden in der Regel Spannspratzen vorgesehen, die die Messerplatte gegen eine Flanke der Nut anpressen und damit festspannen.

Die zweite Messerplatte 21 ist so in die Umfangsfläche 3 des Werkzeugs 1 eingesetzt, daß die zweite Führungsleiste 19 der zweiten Messerplatte 21 um einen Winkel β nacheilt, der 20° bis 50°, insbesondere circa 30° bis 45° betragen kann. Besonders bewährt hat sich ein Winkel β von circa 40°, der auch in Figur 1 eingezeichnet ist.

Der zweiten Messerplatte 21 kann diametral gegenüberliegend eine gestrichelt eingezeichnete dritte Führungsleiste 23 zugeordnet werden, die in die Nut 13 eingesetzt ist. Die zweite Messerplatte 21 bildet mit der zweiten und dritten Führungsleiste 19 und 23 wiederum eine Y-förmige Grundstruktur aus, wie sie bei der ersten Messerplatte 15, der ersten Führungsleiste 17 und der zweiten Führungsleiste 19 gegeben ist. Das hier dargestellte Werkzeug 1 zeichnet sich also dadurch aus, daß die Y-förmige Zuordnung von Messerplatte und Führungsleiste zweimal gegeben ist, wobei die zweite Führungsleiste 19 sowohl in der Y-förmigen Zuordnung der ersten Messerplatte 15 als auch der Y-förmigen Zuordnung der zweiten Messerplatte 21 vorhanden ist.

Anstelle der zweiten Messerplatte 21 oder zusätzlich zu dieser Messerplatte kann eine hier gestrichelt eingezeichnete dritte Messerplatte 25 vorgesehen werden, die in der Nut 11 untergebracht ist. Diese dritte Messerplatte 25 ist vorzugsweise diametral gegenüber der ersten Führungsleiste 17 angeordnet.

Dieser dritten Messerplatte 25 kann eine vierte Führungsleiste 27 um circa 40° nacheilend zugeordnet werden, die ihrerseits in einer Nut 29 angeordnet ist. Die Messerplatte 25 bildet mit der vierten Führungsleiste 27 und mit der ersten Führungsleiste 17 wiederum eine Y-förmige Zuordnung aus.

Nach allem ist es also möglich, eine Y-förmige Zuordnung einer Messeplatte und zweier Führungsleisten, ausgehend von der ersten Messerplatte 15, vorzusehen und zusätzliche Y-förmige Zuordnungen ausgehend von der zweiten Messerplatte 21 und/oder von der dritten Messerplatte 25 vorzusehen.

Das Werkzeug 1 kann also zusätzlich zu der ersten Messerplatte als weitere Messerplatte die zweite Messerplatte 21 oder die dritte Messerplatte 25 mit den zugehörigen Führungsleisten umfassen. Auf diese Weise wird ein sogenanntes zweischneidiges Werkzeug realisiert. Denkbar ist es jedoch auch, außer der ersten Messerplatte 15 sowohl die zweite Messerplatte 21 als auch die dritte Messerplatte 25 vorzusehen, um ein dreischneidiges Werkzeug mit den zugehörigen Führungsleisten auszubilden. Um einen ratterfreien Betrieb bei der Feinbearbeitung von Bohrungsoberflächen zu gewährleisten, muß auf jeden Fall eine Y-förmige Grundstruktur vorhanden sein, die durch die Zuordnung einer Messerplatte und zweier Führungsleisten gegeben ist, wobei -in der durch einen Pfeil angedeuteten Drehrichtung des Werkzeugs gesehen- eine erste Führungsleiste der Messerplatte um 40° und eine zweite Führungsleiste um 180° nacheilt. Die zweite Führungsleiste ist also der Messerplatte diametral gegenüberliegend angeordnet. Es können außer den zusätzlichen Messerplatten weitere Führungsleisten vorgesehen werden, wobei auch eine oder zwei weitere Y-förmige Zuordnungsstrukturen gebildet werden, bei denen einzelne oder mehrere Führungsleisten mehreren derartiger Zuordnungen zugehören.

Figur 2 zeigt wiederum eine Prinzipskizze eines Werkzeugs 1' in Vorderansicht. Der Grundaufbau des Werkzeugs entspricht dem in Figur 1 dargestellten, so daß gleiche Teile mit gleichen Bezugsziffern versehen sind. Das in Figur 2 dargestellte Werkzeug unterscheidet sich von dem in Figur 1 dadurch, daß eine vierte Messerplatte 31 vorgesehen ist, die einer geeigneten in die Umfangsfläche 3 des Werkzeugs 1' eingebrachten Nut 33 eingesetzt ist. Das Werkzeug weist hier wiederum drei Y-förmige Zuordnungen von Messerplatten und Führungsleisten auf, wobei der ersten Messerplatte 15 die Führungsleisten 17 und 19 zugeordnet ist, der zweiten Messerplatte 21 die Führungsleisten 19 und 23 und der dritten Messerplatte 25 die Führungsleisten 27 und 17. In Figur 2 ist gestrichelt angedeutet, daß der vierten Messerplatte 31 eine fünfte Führungsleiste 35 nachgeordnet sein kann, die in einer Nut 37 angeordnet ist. In der durch einen Pfeil angedeuteten Drehrichtung des Werkzeugs 1 gesehen, ist die fünfte Führungsleiste 35 der vierten Messerplatte 31 etwa um ein Winkel von 40° nachgeordnet. Das Werkzeug 1 ist aufgrund der hier bereits gegebenen drei Y-förmigen Zuordnungen von Messerplatte und Führungsleisten so gut in der zubearbeitenden Bohrung geführt und zentriert, daß auf eine Y-förmige Zuordnungsstruktur für die vierte Messerplatte 31 verzichtet werden kann. Außerdem ist festzuhalten, daß die vierte Führungsleiste 27 der vierten Messerplatte 31 praktisch direkt gegenüberliegend angeordnet ist, so daß auch hier eine ausreichende Stabilisierung vorhanden ist.

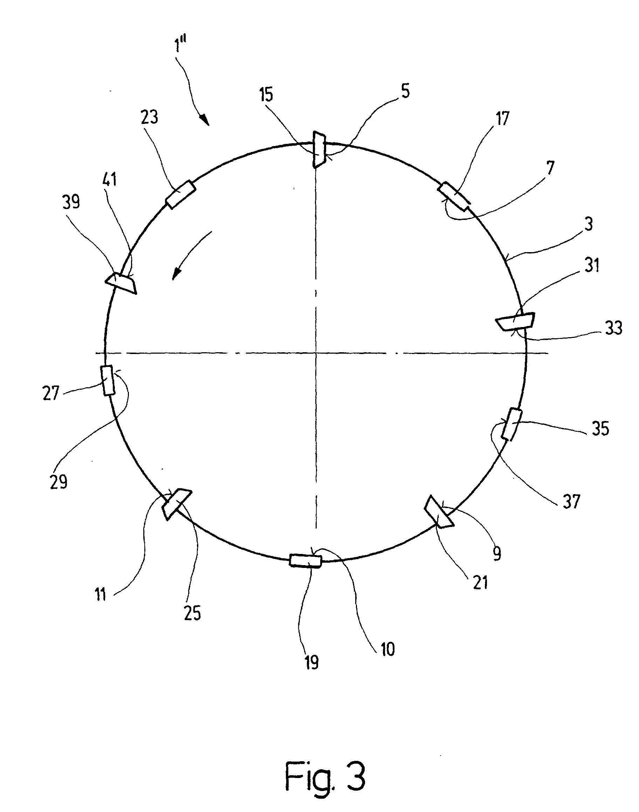

Die in Figur 3 dargestellte Prinzipskizze eines Werkzeugs 1" zeigt eine Ausführungsform mit fünf Messerplatten beziehungsweise Schneiden. Die Schneiden 1 bis 4 entsprechen denen, die in Figur 2 dargestellt sind. Es wird daher insoweit auf die Beschreibung zu Figur 2 verwiesen. Die Führungsleisten 1 bis 5, die in Figur 3 eingezeichnet sind, entsprechen ebenfalls denen, die bereits anhand von Figur 2 erläutert wurden. Das hier dargestellte Werkzeug 1" unterscheidet sich gegenüber dem in Figur 2 gezeigten Werkzeug 1' lediglich dadurch, daß zwischen der dritten Führungsleiste 23 und der vierten Führungsleiste 27 eine fünfte Messerplatte 39 vorgesehen ist, die in eine geeignete in die Umfangfläche des Werkzeugs 1" eingebrachte Nut eingesetzt ist. Die dritte Führungsleiste 23 eilt der fünften Messerplatte 39 -in der durch einen Pfeil angedeuteten Drehrichtung gesehen- um circa 40° nach, so daß für die fünfte Messerplatte 39 und die dritte Führungsleiste 23 die grundsätzliche, bereits anhand der ersten Messerplatte 15 erwähnte Zuordnung gegeben ist. Die fünfte Führungsleiste 35 ist der fünften Messerplatte 39 diametral gegenüberliegend angeordnet, so daß sich letztlich auch für die fünfte Messerplatte 35 die Y-förmige Zuordnung ergibt, die anhand der vorherigen Figuren bereits erläutert wurde.

Das in Figur 3 dargestellte Werkzeug 1" weist mehrere derartiger Zuordnungen auf, wobei die erste Messerplatte 15 und die erste Führungsleiste 17 sowie die zweite Führungsleiste 19 einander zugeordnet sind, außerdem die zweite Messerplatte 21, die zweite Führungsleiste 19 und die dritte Führungsleiste 23. Eine weitere Zuordnung ist durch die dritte Messerplatte 25, die vierte Führungsleiste 27 und die Führungsleiste 17 gegeben. Schließlich ist als letzte Y-förmige Zuordnung die bereits erwähnte fünfte Messerplatte 39 mit den Führungsleisten 23 und 35 gegeben.

Das in Figur 3 dargestellte Werkzeug 1" wird aufgrund dieser Zuordnungen optimal in der zubearbeitenden Bohrungsoberfläche geführt.

Die hier anhand der Figuren 1 bis 3 beschriebenen Werkzeuge zeichnen sich dadurch aus, daß der Vorschub des Werkzeugs innerhalb einer zu bearbeitenden Bohrung wesentlich größer sein kann, als bei herkömmlichen Werkzeugen. Bei Versuchen wurde festgestellt, daß der Vorschub bei einem Werkzeug mit drei Schneiden beziehungsweise Messerplatten, wie es in Figur 1 erläutert wurde, um den Faktor 3 größer sein kann, als bei herkömmlichen Werkzeugen. Entsprechend größere Vorschubwerte ergeben sich bei den Werkzeugen mit vier und fünf Schneiden.

Aufgrund der optimalen Abstützung des Werkzeugs innerhalb der Bohrung bleiben die beispielsweise von Reibahlen bekannten Oberflächenqualitäten und Rundheitswerte erhalten.

Das hier beschriebene Werkzeug ist nach allem besonders für die spanabhebende Fein- und Feinstbearbeitung von Bohrungsoberflächen in Werkstücken aus Metall geeignet. Die Anzahl der gewählten Schneiden und Führungsleisten hängt unter anderem auch von dem Durchmesser des Werkzeugs ab, da, wie bekannt, jeder Schneide ein -in Drehrichtung gesehen- voreilender Spanraum zuzuordnen ist, um eine gute Spanabführung und damit einen fehlerfreien Betrieb des Werkzeugs zu gewährleisten.

Die Erfindung ist besonders vorteilhaft bei Reibahlen einsetzbar. Selbstverständlich lassen sich auch andere Werkzeuge zur spanabhebenden Feinbearbeitung von Bohrungsoberflächen in Werkstücken aus Metall entsprechend der erfindungsgemäßen Lehre ausgestalten.

## Patentansprüche

1. Reibahle für die spanabhebende Feinbearbeitung von Bohrungsoberflächen in Werkstücken aus Metall mit einer Messerplatte und mit zwei dieser zugeordneten Führungsleisten, wobei die erste Führungsleiste der Messerplatte -in Drehrichtung der Reibahle gesehen- um circa 40° nacheilt und die zweite Führungsleiste der Messerplatte diametral gegenüberliegend angeordnet ist, **dadurch gekennzeichnet, daß** die Reibahle (1,1';1") mindestens eine zweite Messerplatte (21) aufweist, die der zweiten Führungsleiste (19) um 20° bis 50°, insbesondere um 30° bis 45°, vorzugsweise um circa 40° voreilt und wenigstens eine dritte Messerplatte (25) umfaßt, die der ersten Führungsleiste (17) diametral gegenüberliegend angeordnet ist.

2. Reibahle für die spanabhebende Feinbearbeitung von Bohrungsoberflächen in Werkstücken aus Metall mit einer Messerplatte und mit zwei dieser zugeordneten Führungsleisten, wobei die erste Führungsleiste der Messerplatte -in Drehrichtung der Reibahle gesehen- um circa 40° nacheilt und die zweite Führungsleiste der Messerplatte diametral gegenüberliegend angeordnet ist, **dadurch, gekennzeichnet, daß** die Reibahle (1;1';1'') mindestens eine Messerplatte (21) aufweist, die der zweiten Führungsleiste (19) um 20° bis 50°, insbesondere um 30° bis 45°, vorzugsweise um circa 40° voreilt oder wenigstens eine Messerplatte (25) umfaßt, die der ersten Führungsleiste (17) diametral gegenüberliegend angeordnet ist.

3. Reibahle nach Anspruch 1 oder 2, **dadurch gekennzeichnet, daß** der der ersten Führungsleiste (17) gegenüberliegenden dritten Messerplatte (25) eine dritte Führungsleiste (27) um 20° bis 50°, insbesondere um 30° bis 45°, vorzugsweise um circa 40° nacheilt.

4. Reibahle nach einem der vorhergehenden Ansprüche, **dadurch gekennzeichnet, daß** der ersten Führungsleiste (17) eine vierte Messerplatte (31) um 20° bis 50°, insbesondere um 30° bis 45°, vorzugsweise um circa 40° nacheilt.

5. Reibahle nach einem der vorhergehenden Ansprüche, **dadurch gekennzeichnet, daß** der zweiten Messerplatte (21), die der zweiten Führungsleiste (19) voreilt, eine gegenüberliegende, vierte Führungsleiste (23) zugeordnet ist.

6. Reibahle nach einem der vorhergehenden Ansprüche, **dadurch gekennzeichnet, daß** drei, vier oder fünf Messerplatten vorgesehen sind.

7. Reibahle nach einem der vorhergehenden Ansprüche, **dadurch gekennzeichnet, daß** die Reibahle mindestens zwei Y-förmige Zuordnungen einer Messerplatte und jeweils zweier zugehöriger Führungsleisten aufweist.

8. Reibahle nach Anspruch 7, **dadurch gekennzeichnet, daß** wenigstens eine Führungsleiste auch mehreren Messerplatten zuordenbar ist.

## Revendications

1. Alésoir pour l'usinage de finition avec enlèvement de copeaux de la surface de perçage réalisée dans des pièces en métal, comportant une lame et deux barres de guidage associées à celle-ci, la première barre de guidage étant en aval de la lame d'environ 40° (dans le sens de rotation de l'alésoir) et la seconde barre de guidage étant diamétralement opposée à la lame, **caractérisé en ce que** l'alésoir (1 ; 1' ; 1'') comporte au moins une seconde lame (21) qui est en amont de la seconde barre de guidage (19) d'environ 20° à 50°, notamment de 30° à 45°, de préférence d'environ 40° et au moins une troisième lame (25) diamétralement opposée à la première barre de guidage (17).

2. Alésoir pour la finition avec usinage par enlèvement de copeaux de surfaces de perçage de pièces en métal comportant une lame et deux barres de guidage associées à celle-ci, la première barre de guidage étant en aval de la lame d'environ 40° (dans le sens de rotation de la barre de guidage) et la seconde barre de guidage étant diamétralement opposée à la lame, **caractérisé en ce que** l'alésoir (1 ; 1' ; 1'') comporte au moins une lame (21) en amont de la seconde barre de guidage (19) d'au moins 20° à 50°, notamment de 30° à 45° et de préférence d'environ 40°, ou au moins une lame (25) diamétralement opposée à la première barre de guidage (17).

3. Alésoir selon l'une quelconque des revendications 1 ou 2, **caractérisé en ce qu'**une troisième barre de guidage (27) est en aval de 20° à 50°, notamment de 30° à 45° et de préférence d'environ 40° par rapport à la troisième lame (25) opposée à la première barre de guidage (17).

4. Alésoir selon l'une quelconque des revendications précédentes, **caractérisé en ce qu'**une quatrième lame (31) est en aval de 20° à 50°, notamment de 30° à 45° et de préférence d'environ 40° par rapport à la première barre de guidage (17),

5. Alésoir selon l'une quelconque des revendications précédentes, **caractérisé en ce que** la seconde lame (21), qui est en amont de la seconde barre de guidage (19), comporte une quatrième barre de guidage (23), opposée.

6. Alésoir selon l'une quelconque des revendications précédentes, **caractérisé en ce que** trois, quatre ou cinq lames sont prévues.

7. Alésoir selon l'une quelconque des revendications précédentes, **caractérisé en ce que** l'alésoir comporte au moins deux dispositions en Y d'une lame et chaque fois de deux barres de guidage correspondantes.

8. Alésoir selon la revendication 7, **caractérisé en ce qu'**au moins une barre de guidage peut être associée à plusieurs lames.

## Claims

1. Reamer for the precision machining of the surfaces of holes in metal work pieces having a knife blade and having two guide strips assigned to this, wherein the first guide strip runs behind the knife blade at about 40° - as viewed in the direction of rotation of the reamer - and the second guide strip is disposed to lie diametrically opposite the knife blade, **characterised in that** the reamer (1; 1'; 1'') has at least a second knife blade (21), which runs before the second guide strip (19) at 20° to 50°, in particular at 30° to 45°, and preferably at about 40°, and comprises at least a third knife blade (25), which is disposed to lie diametrically opposite the first guide strip (17).

2. Reamer for the precision machining of the surfaces of holes in metal work pieces having a knife blade and having two guide strips assigned to this, wherein the first guide strip runs behind the knife blade at about 40° - as viewed in the direction of rotation of the reamer - and the second guide strip is disposed to lie diametrically opposite the knife blade, **characterised in that** the reamer (1; 1'; 1'') has at least one knife blade (21), which runs before the second guide strip (19) at 20° to 50°, in particular at 30° to 45°, and preferably at about 40°, or comprises at least one knife blade (25), which is disposed to lie diametrically opposite the first guide strip (17).

3. Reamer according to Claim 1 or 2, **characterised in that** a third guide strip (27) runs after the third knife blade (25) located opposite the first guide strip (17) at 20° to 50°, in particular at 30° to 45°, and preferably at about 40°.

4. Reamer according to one of the preceding claims, **characterised in that** a fourth knife blade (31) runs after the first guide strip (17) at 20° to 50°, in particular at 30° to 45°, and preferably at about 40°.

5. Reamer according to one of the preceding claims, **characterised in that** an opposing fourth guide strip (23) is assigned to the second knife blade (21), which runs before the second guide strip (19).

6. Reamer according to one of the preceding claims, **characterised in that** three, four or five knife blades are provided.

7. Reamer according to one of the preceding claims, **characterised in that** the reamer has at least two Y-shaped assigned arrangements of a knife blade and two associated guide strips in each case.

8. Reamer according to Claim 7, **characterised in that** at least one guide strip may also be assigned to several knife blades.
